(19) Europäisches Patentamt
European Patent Office
Office européen des brevets

(11) Veröffentlichungsnummer : **0 063 291**
**B1**

(12) # EUROPÄISCHE PATENTSCHRIFT

(45) Veröffentlichungstag der Patentschrift : **07.08.85**

(51) Int. Cl.[4] : **C 25 D 3/38**, G 11 B 3/44

(21) Anmeldenummer : **82102849.5**

(22) Anmeldetag : **03.04.82**

(54) **Verfahren zur Herstellung eines Schneidträgers.**

(30) Priorität : **08.04.81 DE 3114131**

(43) Veröffentlichungstag der Anmeldung : **27.10.82 Patentblatt 82/43**

(45) Bekanntmachung des Hinweises auf die Patenterteilung : **07.08.85 Patentblatt 85/32**

(84) Benannte Vertragsstaaten : **AT BE CH DE FR GB IT LI LU NL SE**

(56) Entgegenhaltungen : **DE-A- 2 811 888**
**Die Akte enthält technische Angaben, die nach dem Eingang der Anmeldung eingereicht wurden und die nicht in dieser Patentschrift enthalten sind.**

(73) Patentinhaber : **TELDEC Schallplatten GmbH**
**Heussweg 25**
**D-2000 Hamburg 20 (DE)**

(72) Erfinder : **Knothe, Herbert, Dipl.-Ing.**
**van-Dyck-Strasse 13**
**D-2350 Neumünster (DE)**
Erfinder : **Röschmann, Klaus**
**Bekkamp 5**
**D-2352 Schülp/Ntf. (DE)**

(74) Vertreter : **Einsel, Robert, Dipl.-Ing.**
**Theodor-Stern-Kai 1**
**D-6000 Frankfurt/Main 70 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 063 291 B1

**Beschreibung**

Die Erfindung betrifft ein Verfahren zur Herstellung eines Schneidträgers, insbesondere zur Herstellung von Schallplatten, nach dem Oberbegriff des Anspruchs 1.

Die Erfindung geht aus von der DE-PS 28 11 888, in der ein Verfahren zur Herstellung einer mit einer Rillenmodulation versehenen Metallmatrize angegeben ist. Dabei wird zunächst aus einem Kupferbad galvanisch eine dünne Schicht aus Kupfer auf ein Substrat aufgebracht und die Rillenmodulation anschließend mittels eines über die Metallmatrize geführten Schneidstichels elektromechanisch in die Schicht aus Kupfer eingeschnitten. Das galvanische Bad enthält Glanzzusätze, die der Schicht aus Kupfer eine Vickershärte zwischen 110 bis 300 verleihen. Beim Schneiden der Rillenmodulation wird der Schneidstichel unter einem Anstellwinkel zwischen 10° und 20° über die Metallmatrize geführt.

Bei diesem bekannten Verfahren wird eine Schneidschicht aus Kupfer abgeschieden, die zur Herstellung von Videoaufzeichnungen geeignet ist, die jedoch den Anforderungen zur Herstellung von Schallplatten mit analogem Schnitt mit sehr viel größerer Modulationstiefe nicht genügt. Die Anwendung der bekannten Lehre kann nämlich zur Abscheidung eines Kupfers führen, das zum Schneiden von Schallaufzeichnungen nicht geeignet ist oder nicht geeignet wird. Infolge der sehr viel größeren Schnittiefe bei analogen Schallaufzeichnungen als bei digital oder frequenzmodulierten Videoaufzeichnungen setzt das Kupfer dem Schneidstichel einen sehr viel größeren Widerstand entgegen.

Bei der herkömmlichen Technologie zum Herstellen von Schallplatten wird auf ein Substrat, z. B. Aluminium, eine Schneidschicht aus Nitrozellulose aufgebracht, in die die Modulation geschnitten wird. Gegenüber einer Kupferschneidschicht ist eine Lackschicht sehr viel weicher und setzt dem Schneidstichel einen geringeren Widerstand entgegen. Die Qualität einer Lackaufzeichnung ist jedoch aus anderen Gründen begrenzt, es treten systembedingte Fehler, wie Vor- und Nachechos auf.

Es ist Aufgabe der Erfindung, ein Verfahren zur Herstellung eines Schneidträgers mit einer Schneidschicht aus Kupfer anzugeben, das in der Lage ist, auch bei Schallaufzeichnungen verwendet zu werden und gegenüber einer herkömmlichen Lackaufzeichnung Qualitätsverbesserungen bringt.

Diese Aufgabe wird durch die im Patentanspruch 1 angegebene Erfindung gelöst. Weitergehende Merkmale der Erfindung sind in den Unteransprüchen beschrieben.

Bei dem erfindungsgemäßen Verfahren ist es möglich, ein Kupfer abzuscheiden, das rekristallisierbar ist und sich daher in einer instabilen Phase befindet. Der Bereich der Rekristallisierbarkeit des Kupfers erstreckt sich von etwa 160 bis 220 $kg/mm^2$ nach Vickers. Durch das erfindungsgemäße Verfahren wird eine Härte in diesem Bereich mit gleichzeitiger Duktilität und Elastizität erreicht, die Voraussetzung für ein gutes Schneidverhalten ist. Es hat sich gezeigt, daß gegenüber einer herkömmlichen Lackaufzeichnung der Ausschuß nach dem erfindungsgemäßen Verfahren wesentlich reduziert werden konnte, die Qualität der Aufzeichnung konnte verbessert werden, insbesondere verbesserte sich der Störabstand um etwa 10 dB. Es sind keine Blasen, Lufteinschlüsse, Lunker oder Verzerrungen vorhanden.

Bei dem erfindungsgemäßen Verfahren gibt es keine Vor- oder Nachechos mehr, die bei einer herkömmlichen Lackaufzeichnung nicht zu vermeiden sind. Bei der Herstellung von galvanischen Abformlingen ist keine komplizierte Versilberung erforderlich. Der geschnittene Aufzeichnungsträger ist unbegrenzt lagerfähig, es lassen sich jederzeit weitere Abzüge herstellen. Alle zeitlich folgenden Abzüge behalten gegenüber dem ersten Abzug eine gleichbleibende Qualität.

Die Erfindung wird nachstehend an Hand eines Ausführungsbeispiels näher erläutert.

Die Figur zeigt eine Darstellung des zeitlichen Verlaufs der Härte einer Schneidschicht, die nach dem erfindungsgemäßen Verfahren hergestellt wurde.

In der Figur ist auf der horizontalen Achse die Zeit aufgetragen, auf der vertikalen Achse die Härte nach Vickers. Der Anfangspunkt der Zeitachse entspricht der Herstellungszeit. Je nach Badzusammensetzung und Badbedingung des Elektrolyten zur Abscheidung der Schneidschicht auf dem Schneidträger ergibt sich ein unterschiedlicher Anfangswert der erreichten Vickershärte. Es sind vier verschiedene Härteverlaufskurven dargestellt, die bei unterschiedlichen Anfangshärtewerten beginnen. Die Kurve 1 zeigt den zeitlichen Verlauf der Härte der Schneidschicht, die bei einem Anfangswert von etwa 150 abgeschieden wurde. Die Kurven 2, 3 und 4 zeigen Anfangswerte von etwa 180, 200 bzw. 250. Es zeigt sich, daß die Kurven 1, 2, 3 zwar bei unterschiedlichen Anfangswerten beginnen, jedoch nach einer gewissen Zeit auf den Endwert 124 abfallen. Lediglich die Kurve 4 zeigt keinen Abfall, sondern bleibt etwa konstant bei der Härte 250. Die Stärke des Abfalls der Kurven 1, 2, 3 d. h. ihre Abfallgeschwindigkeit, hängt direkt von der Temperatur ab. Je höher die Umgebungstemperatur ist, um so schneller ist der Abfall der Härte. Bei einer Temperatur von 100 °C ist ein nach dem erfindungsgemäßen Verfahren hergestellter Schneidträger bereits nach einer Stunde nicht mehr zum Schneiden einer Schallaufzeichnung brauchbar.

Der Härteabfall des abgeschiedenen Kupfers nimmt mit steigender Anfangshärte ab. Bei Härten oberhalb 250 HV ist bei Raumtemperatur kaum noch ein Härteabfall zu verzeichnen. Mit sinkender Ausgangshärte ist in Abhängigkeit von der Temperatur ein schnellerer Härteabfall zu beobachten und erreicht mit ca. 124 HV seinen Endwert. Dieser Härteabfall wird als Rekristallisation bezeichnet. Bei der Rekristallisierung handelt es sich um eine Molekülbewegung im Gefüge, die durch die Temperatur beschleunigt wird.

Entsprechend der Figur ist zu erkennen, daß die Kurve 2 etwa bei einem Wert von 180 beginnt und bereits nach einem Tag den Wert 160 erreicht hat, unterhalb dessen wegen der zunehmenden Weichheit des Kupfers ein Schneiden nicht mehr möglich ist.

Bei einem Anfangswert der Härte von etwa 200 dauert es bei Normaltemperatur etwa drei Tage, bis der untere Wert von 160 erreicht ist. Bei diesem hohen Ausgangswert ergeben sich allerdings schon schlechtere Schneideigenschaften als bei einem Ausgangswert von 180. Es sollte daher bei einen möglichst niedrigen Wert gerade über dem unteren Wert von 160 abgeschieden werden, jedoch ist dann die nach dem Abscheiden des Kupfers verfügbare Zeit zum Schneiden der Aufzeichnung relativ kurz. Es empfiehlt sich daher, den Schneidträger bis zum Schneiden bei möglichst niedriger Temperatur aufzubewahren, um die Zeit der Rekristallisierung zu verlängern und die mögliche Zeit bis zum Abfall der Härte auf den unteren Grenzwert von 160 hinauszuschieben.

Die dargestellten Kurven beziehen sich auf eine Lagertemperatur von etwa 20 °C. Die Verlaufskurven ergaben sich in der Praxis bei folgender Rezeptur:

Kurve 2 (Anfangshärte 180 HV)

| | |
|---|---|
| Kupfersulfat | 240 g/l |
| Schwefelsäure | 70 g/l |
| Chlorionen | 70 mg/l |
| Netzmittel | 5 ml/l |
| Glanzmittel | 0,5 ml/l |
| Einebner | 80 mg/l |
| Stromdichte | 12 $A/dm^2$ |
| Rotationsgeschwindigkeit | 16 U/min |
| Luftdurchsatz | 2,5 l (Luft)/min.l |

Kurve 3 (Anfangshärte 200 HV)

| | |
|---|---|
| Kupfersulfat | 240 g/l |
| Schwefelsäure | 70 g/l |
| Chlorionen | 70 mg/l |
| Netzmittel | 5 ml/l |
| Glanzmittel | 0,7 ml/l |
| Einebner | 100 mg/l |
| Stromdichte | 12 $A/dm^2$ |
| Rotationsgeschwindigkeit | 16 U/min |
| Luftdurchsatz | 2,5 l (Luft)/min.l |

Kurve 1 zeigt eine Härteverlaufskurve mit einem Anfangshärtewert von 150 HV, die ein nicht schneidfähiges Kupfer darstellt. Diese Kurve wurde durch Zugabe von lediglich 0,2 ml/l Glanzmittel bei 300 g/l Kupfersulfat, hoher Stromdichte von 15 $A/dm^2$ und geringer Konvektion erhalten.

Kurve 4 zeigt ebenfalls eine Härteverlaufskurve, die eine über der Zeit gleichbleibende Härte von 250 HV angibt. Dies wird durch Zugabe von 0,8 ml/l Glanzmittel, 150 g/l Kupfersulfat, einer Stromdichte von nur 2 $A/dm^2$ sowie großer Konvektion erreicht. Diese Rezeptur ist also ebenfalls nicht zur Herstellung eines schneidfähigen Kupfers geeignet.

Die Rezepturen, die für die Kurven 2 und 3 verwendet werden, führen nach etwa 1/2 Stunde zu einer galvanischen Abscheidung auf einem Substrat, z. B. Aluminium, mit einer Schichtdichte von 80 µm, die für eine Schallaufzeichnung ausreichend ist.

Das verwendete Glanzmittel ist z. B. aus der DE-PS 11 46 322 bekannt. Ein derartiges Glanzmittel enthält solche organischen Sulfonsäuren oder deren Salze, welche im Molekül wenigstens einen Thioharnstoffrest und wenigstens einen Dithiocarbaminsäurerest oder wenigstens einen Arylrest besitzen oder deren Sulfonsäurerest in Form eines Alkylsulfonrestes über das Schwefelatom des Thioharnstoffrestes gebunden ist.

Eine geeignete Einebnersubstanz ist aus der DE-PS 14 96 772 bekannt und für die Zwecke der Erfindung gut geeignet. Die Einebnersubstanz hat die allgemeine Formel

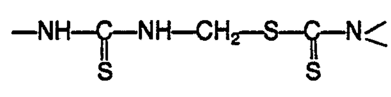

wobei die freien Valenzen der Stickstoffatome an aliphatische, cycloaliphatische oder aromatische Reste bzw. Wasserstoff gebunden sein können, die freien Valenzen des Stickstoffatoms des Dithiocarbaminsäurerestes zusammen mit dem Stickstoff auch ein Heteroringsystem bilden können und die freie Valenz des Stickstoffatoms des Thioharnstoffrestes auch an einem weiteren Dithiocarbaminsäure — S-methylrest nach der obigen Formal gebunden sein kann.

Zur Verhinderung von Poren ist es vorteilhaft, ein Netzmittel zu verwenden. Eine in der DE-PS

14 96 772 angegebene Rezeptur ist dafür gut geeignet. Es handelt sich dabei um ein Anlagerungsprodukt aus 8 Mol Äthylenoxid an 1 Mol Dodecylalkohol.

Die verwendeten Parameter führen innerhalb folgender Bereichsgrenzen zu einer Kupferschicht, die für die Zwecke der Erfindung ausreichend sind.

| | |
|---|---|
| Kupfersulfat | 150-300 g/l |
| Schwefelsäure | 20-100 g/l |
| Chlorionen | 40-120 mg/l |
| Netzmittel | 1-20 ml/l |
| Glanzmittel | 0,2-0,8 ml/l |
| Einebner | 50-500 mg/l |
| Stromdichte | 1-12 $A/dm^2$ |
| Rotationsgeschwindigkeit | 10-60 U/min |
| Luftdurchsatz | 0-10 l (Luft)/min.l |

Die Angabe l = Liter bezieht sich dabei auf das Bad-Volumen.

Die Schneidfähigkeit des Kupfers wird durch folgende Badparameter wesentlich beeinflußt:

a) Kupferionenkonzentration,
b) Glanzmittelkonzentration,
c) Konvektion,
d) Stromdichte.

Bei niedriger Kupferionenkonzentration kann auch der Gehalt an Glanzzusatz abgesenkt werden, weil bei gleicher Stromdichte im Kathodenfilm das Verhältnis Glanzmittel zu Kupferionen sich ebenfalls ändert. Je höher der Kupfergehalt ist, um so mehr Glanzmittel muß vorhanden sein, um das Verhältnis im Niederschlag gleich zu halten. Die Menge des Glanzmittelzusatzes ist für die Rekristallisierbarkeit ein entscheidender Faktor. Kupfer mit gesättigter Glanzmittelkonzentration im Niederschlag ist nicht rekristallisierbar, solche Kupferniederschläge zeigen keine guten Schneideigenschaften.

Die im Bad notwendigen Chlorionen werden in Form von Salzsäure zugegeben. Es läßt sich aber auch Kochsalz verwenden.

Das verwendete Netzmittel ist zur Verhinderung von Poren vorteilhaft. Es sollte ein schaumarmes Netzmittel verwendet werden, um bei der Konvektion des Bades kein Überschäumen zu verursachen.

Je mehr der Elektrolyt bewegt wird, um so mehr frische Mengen aus dem Elektrolyten werden in den Kathodenfilm nachgeliefert. Es ist daher auf gute Konvektion des Bades zu achten.

Die Konvektion kann vorteilhaft durch Drehung des Aufzeichnungsträgers bzw. der Kathode mit einer Umdrehungsgeschwindigkeit von ca. 10-60 Umdrehungen/min oder durch starke Elektrolytumwälzung, andererseits durch Einblasung von Luft, die insbesondere ölfrei sein sollte, erreicht werden. Durch Rotationsbewegung, Einblasung von Luft oder starke Elektrolytbewegung wird gewährleistet, daß immer wieder Kupferionen und Glanzmittel an das Substrat nachgeliefert werden. Die Einblasung von Luft vermeidet darüberhinaus Konvektionsspuren. Dadurch wird eine glatte Oberfläche erzeugt, die für die Aufzeichnung ausreichend ist.

Weiterhin ist die Stromdichte von entscheidender Bedeutung für die Erzeugung eines schneidfähigen Kupfers. Mit sinkender Stromdichte werden die Niederschläge härter. Bei einem Absenken der Stromdichte auf weniger als $^1A/dm^2$ werden Härtewerte von 250 und mehr erreicht. Derartige Kupferschichten sind jedoch nicht mehr schneidfähig. Die oben angegebenen Rezepte ergeben ein schneidfähiges Kupfer mit einer Anfangshärte von etwa 180 bis 200.

Stromdichte und Konvektion sind neben dem Gehalt an Glanzmittel und Kupferionen von großer Bedeutung für den Härteverlauf.

Niedriger Glanzmittelgehalt, hohe Stromdichte, geringe Konvektion und hoher Kupfersulfatgehalt führen zu einem Kupfer mit niedriger Anfangshärte.

Hoher Glanzmittelgehalt, niedriger Kupfersulfatgehalt, niedrige Stromdichte und große Konvektion führen umgekehrt zu einem Kupfer mit hoher Anfangshärte.

Als Substrat für den Schneidträger ist ein hochwertiges Trägermaterial notwendig, wie z. B. eine Aluminiumplatte. Sie sollte lunkerfrei sein und, da sich Oberflächenrauheiten durch den Kupferfilm hindurch abbilden, eine ebene gute Oberflächenqualität aufweisen, gegebenenfalls muß der Träger einer geeigneten Oberflächenbehandlung unterworfen werden. Kleine Oberflächenfehler werden durch den in dem Elektrolyten vorhandenen Einebner gemildert bzw. völlig eingeebnet.

**Patentansprüche**

1. Verfahren zur Herstellung eines Schneidträgers mit einer schneidfähigen Kupferschicht, insbesondere zur Verwendung als Aufzeichnungsträger für die Herstellung von Schallplatten, bei dem in einem galvanischen Bad auf einen Träger eine Kupferschicht aufgebracht wird, und durch eine vorgegebene

Konzentration von Glanzzusätzen eine gewünschte Vickershärte der abgeschiedenen Kupferschicht erreichbar ist, dadurch gekennzeichnet, daß die verwendete Stromdichte größer als 10 A/dm² beträgt, daß eine sich in einer rekristallisierbaren Phase befindliche Kupferschicht abgeschieden wird, und daß das Schneiden der Information noch während der Rekristallisierungsphase erfolgt.

2. Verfahren nach Anspruch 1, dadurch gekennzeichnet, daß
a) die Abscheidung bei einer Stromdichte von 12 A/dm² erfolgt,
b) das Bad folgende Zusammensetzung aufweist :

150-300 g/l Kupfersulfat
20-100 g/l Schwefelsäure
40-120 g/l Chlorionen
1-20 ml/l Netzmittel
0,2-0,8 ml/l Glanzmittel
50-500 mg/l Einebnersubstanz

3. Verfahren nach Anspruch 2, dadurch gekennzeichnet, daß das Bad folgende Zusammensetzung aufweist :

240 g/l Kupfersulfat
70 g/l Schwefelsäure
70 mg/l Chlorionen
ein Glanzzusatzsystem, das
5 ml/l Netzmittel
0,5-0,7 ml/l Glanzmittel
80-100 mg/l Einebnersubstanz

enthält.

4. Verfahren nach Anspruch 2 oder 3, dadurch gekennzeichnet, daß eine Konvektion des Bades durch Drehung des Aufzeichnungsträgers bzw. der Kathode mit einer Umdrehungsgeschwindigkeit von 10-60 U/min durchgeführt wird.

5. Verfahren nach Anspruch 2, 3 oder 4, dadurch gekennzeichnet, daß der Luftdurchsatz 0-10 Liter Luft/min. Liter Badvolumen beträgt.

6. Verfahren nach einem der Ansprüche 1-5, dadurch gekennzeichnet, daß die Temperatur des Bades auf Raumtemperatur gehalten wird, und daß der Schneidträger bis zum Schneiden der Information auf möglichst niedriger Temperatur gehalten wird.

7. Verfahren nach einem der Ansprüche 1-5, dadurch gekennzeichnet, daß das Schneiden der Information während der Zeit erfolgt, in dem in der Rekristallisierungsphase die Vickershärte des abgeschiedenen Kupfers 160 bis 220 kg/mm² beträgt.

**Claims**

1. Process for the manufacture of a cuttable carrier having a cuttable copper layer, especially for the use as a record carrier for the manufacture of gramaphone records, in which a copper layer is applied on a carrier in a galvanising bath and a desired Vickers hardness of the deposited copper layer is achievable by a predetermined concentration of gloss additives, characterized by the fact that the current density employed amounts to more than 10 A/dm², that a copper layer is deposited which occurs in a recrystallisable phase, and that in addition the cutting of the information takes place during the recrystallisation phase.

2. Process according to Claim 1, characterized by the fact that
a) the deposition takes place at a current density of 12 A/dm²
b) the bath displays the following composition :

150-300 g/l copper sulphate
20-100 g/l sulphuric acid
40-120 g/l chlorine ions
1-20 ml/l wetting agent
0.2-0.8 ml/l gloss agent
50-500 mg/l smoothing substance

3. Process according to Claim 2, characterized by the fact that the bath displays the following composition :

240 g/l copper sulphate
70 g/l sulphuric acid

70 mg/l chlorine ions
a gloss additive system, which contains
5 ml/l wetting agent.
0.5-0.7 ml/l gloss agent
80-100 mg/l smoothing substance

4. Process according to Claim 2 or 3, characterized by the fact that a circulation is produced in the bath by rotation of the record carrier or of the cathode with a rotational speed of 10-60 U/min.

5. Process according to Claim 2, 3 or 4, characterized by the fact that the air throughput amounts to 0-10 litres of air/min. bath volume in litres.

6. Process according to any one of the Claims 1-5, characterized by the fact that the temperature of the bath is maintained at room temperature and that the cuttable carrier is maintained at the lowest possible temperature until the cutting of the information.

7. Process according to any one of the Claims 1-5, characterized by the fact that the cutting of the information takes place during the time in which, in the recrystallisation phase, the Vickers hardness of the deposited copper amounts to 160 to 220 $kg/mm^2$.

**Revendications**

1. Procédé pour la fabrication d'une matrice de reproduction ayant une couche de cuivre apte à la gravure, en particulier pour l'utilisation comme support d'enregistrement pour la fabrication de disques, dans lequel on dépose une couche de cuivre sur un support dans un bain galvanique et une dureté Vickers souhaitée de la couche de cuivre déposée peut être atteinte par une concentration prédéterminée de brillanteurs, caractérisé en ce que la densité de courant utilisée est de plus de 10 $A/dm^2$, en ce qu'il précipite une couche de cuivre se trouvant dans une phase recristallisable et en ce que la gravure de l'information a lieu encore pendant la phase de recristallisation.

2. Procédé selon la revendication 1, caractérisé en ce que
a) la précipitation s'effectue à une densité de courant de 12 $A/dm^2$,
b) le bain présente la composition suivante :

150-300 g/l de sulfate de cuivre
20-100 g/l d'acide sulfurique
40-120 g/l d'ions chlore
1-20 ml/l d'agent mouillant
0,2-0,8 ml/l de brillanteur
50-500 mg/l d'aplanisseur

3. Procédé selon la revendication 2, caractérisé en ce que le bain présente la composition suivante :

240 g/l de sulfate de cuivre
70 g/l d'acide sulfurique
70 mg/l d'ions chlore
un système brillanteur qui contient
5 ml/l d'agent mouillant
0,5-0,7 ml/l de brillanteur
80-100 mg/l d'aplanisseur

4. Procédé selon la revendication 2 ou 3, caractérisé en ce que l'on met en œuvre une convection du bain par rotation du support d'enregistrement ou de la cathode à une vitesse de rotation de 10-60 t/min.

5. Procédé selon la revendication 2, 3 ou 4, caractérisé en ce que le débit d'air est de 0-10 litres d'air/minutes/litres de bain.

6. Procédé selon l'une des revendications 1 à 5, caractérisé en ce que la température du bain est maintenue à la température ambiante et en ce que la matrice de reproduction est maintenue à la température la plus basse possible jusqu'à la gravure de l'information.

7. Procédé selon l'une des revendications 1 à 5, caractérisé en ce que la gravure de l'information s'effectue pendant la durée dans laquelle la dureté Vickers du cuivre précipité atteint dans la phase de recristallisation 160 à 220 $kg/mm^2$.

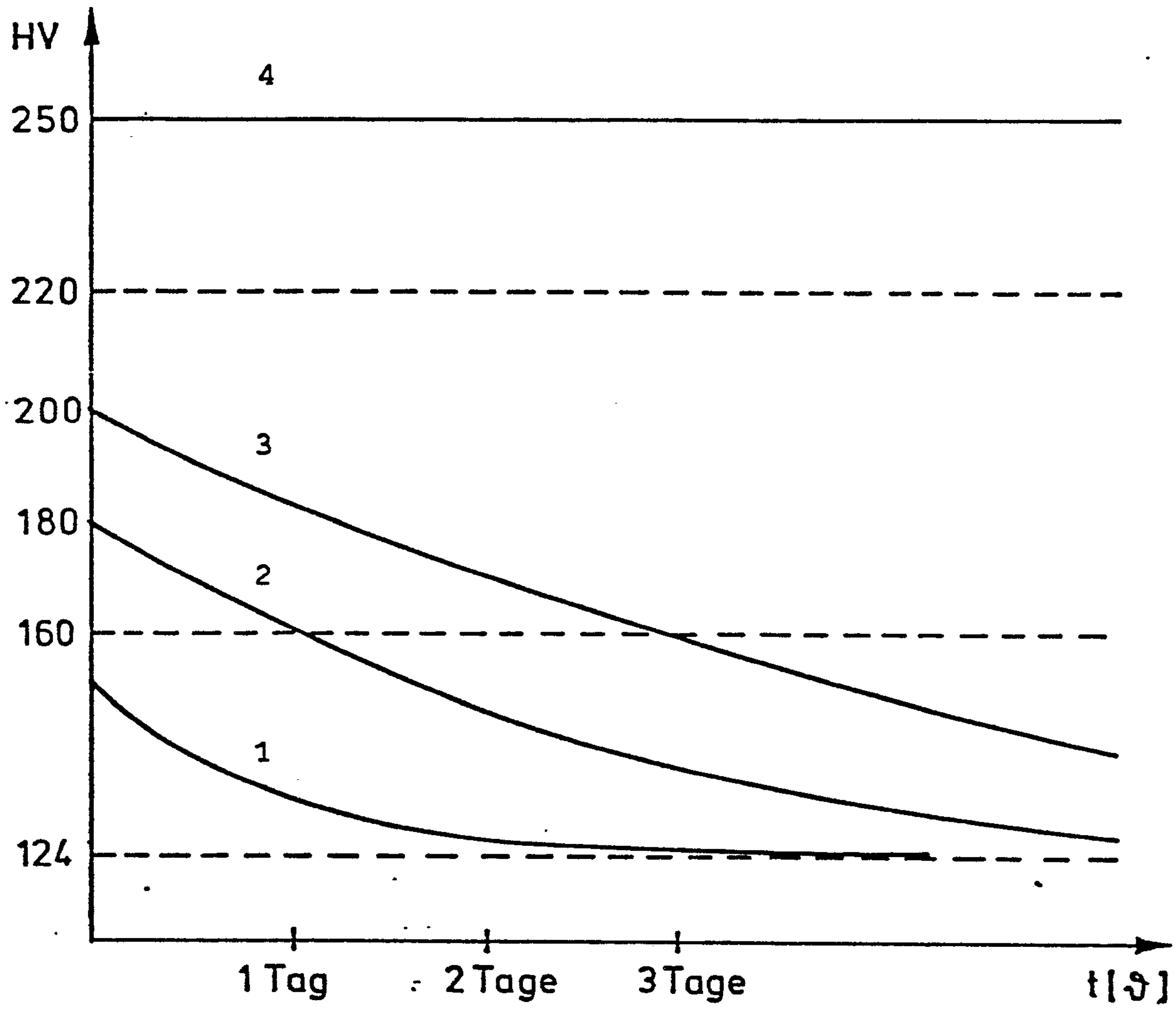
HV
4
250
220
200
3
180
2
160
1
124
1 Tag
2 Tage
3 Tage
t [ϑ]